**Europäisches Patentamt**

**European Patent Office**

**Office européen des brevets**

(19)

(11) Veröffentlichungsnummer : **0 334 835 B1**

(12)

# EUROPÄISCHE PATENTSCHRIFT

(45) Veröffentlichungstag der Patentschrift :
**24.02.93 Patentblatt 93/08**

(51) Int. Cl.$^5$ : **C04B 24/30,** C04B 38/00,
C04B 16/04

(21) Anmeldenummer : **89890074.1**

(22) Anmeldetag : **15.03.89**

(54) **Verfahren zur Herstellung von Poren enthaltenden Festkörpern aus einem Gemisch von Bindemitteln, Zuschlagstoffen und Zusatzstoffen.**

(30) Priorität : **25.03.88 AT 814/88**

(43) Veröffentlichungstag der Anmeldung :
**27.09.89 Patentblatt 89/39**

(45) Bekanntmachung des Hinweises auf die
Patenterteilung :
**24.02.93 Patentblatt 93/08**

(84) Benannte Vertragsstaaten :
**AT BE CH DE FR GB IT LI LU NL SE**

(56) Entgegenhaltungen :
**DE-A- 3 026 719**
**FR-A- 2 228 816**
**GB-A- 523 450**
**US-A- 2 255 998**

(73) Patentinhaber : **Heidelberger Baustofftechnik
GmbH
Berliner Strasse 6
W-6900 Heidelberg (DE)**

(72) Erfinder : **Schwarz, Gerhard, Dipl.-Ing. Dr.
techn.
Trauttmansdorffgasse 8
A-1130 Wien (AT)**
Erfinder : **Tögel, Rudolf, Ing
Raimundgasse 2
A-2563 Pottenstein (AT)**

(74) Vertreter : **Gibler, Ferdinand, Dipl.Ing. Dr.
techn.
Dorotheergasse 7/14
A-1010 Wien (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Poren enthaltenden Festkörpern aus einem Gemisch von Bindemitteln, vorzugsweise Zement, Zuschlagstoffen sowie gegebenenfalls an sich bekannten Hilfs- und Zusatzstoffen durch Zugabe von Wasser, Verformung und gegebenenfalls Verdichtung der entstehenden Masse und Aushärtung derselben.

Die Herstellung von mit Zement oder anderen hydraulischen und chemischen Bindemitteln angefertigten Baukörpern, die Luft- oder Gasporen enthalten, wird immer bedeutungsvoller, weil entsprechend dem Fortschritt der Technik der Hochbau, Tiefbau, Straßenbau und die Isoliertechnik immer höhere und spezifischere Forderungen hinsichtlich der physikalischen, chemischen und mechanischen Eigenschaften der Baustoffe stellen, insbesondere an die Frost- und an die Frost-Tausalzbeständigkeit.

Bei der Herstellung von Porenbeton ist je nach beabsichtigter Wirkung und Verwendung des Betones zu beachten, daß die Porenmenge und Porengröße den festgelegten Werten entspricht, zumindest aber innerhalb ebenfalls festlegbarer Toleranzen bleibt.

Von den bekanntesten Verfahren sind zu nennen:

1) Schäumen des noch nassen Betones durch Lufteinmischung unter Zuhilfenahme verschiedener Tenside,

2) Erzeugung von Gasporen oder Gasblasen durch Auslösen chemischer Reaktionen im noch nicht erstarrten Beton,

3) Einmischen von luft- oder gashältigen, meist selbst schaumig vorgeformten und/oder granulierten, optisch kornsortierten Feststoffen aus Kunststoffen oder aus anorganischem Material bzw. Gemischen dieser Materialien.

Besonders das unter 1) beschriebene Verfahren wird als gefährlich angesehen, weil auf Baustellen die verlangte außerordentliche Genauigkeit der Dosierung des Tensides nicht leicht eingehalten werden kann und die Porenmenge von vielen Imponderabilien, z.B. von der Temperatur des Mischgutes, der Mischdauer und Umdrehungszahl einer Mischmaschine, abhängt.

Alle diese verfahren haben bekanntlich Nachteile und können sicher nicht für jeden Anwendungszweck eingesetzt werden. Ein sehr wesentlicher Umstand bei der Schaffung eines Porensystems im Beton ist die Kontrollierbarkeit der Porenbildung, weil ausgehend von der Gefahr einer Unterdosierung zumeist eine Überdosierung Platz greift, welche die Festigkeitswerte des Betons stark absinken läßt.

Ein wesentlicher Nachteil der unter 1) und 2) genannten Verfahren ist der Umstand, daß die Porenbildner oder Wirkstoffe nicht mit hydraulischen Bindemitteln oder Zement vorgemischt werden können, weil es wegen ihres Wassergehaltes oder ihrer chemischen Zusammensetzung zu vorzeitigen Reaktionen mit dem Zement kommt. Nach den Vorstellungen der Praxis könnte ein "Sonderzement", der Poren oder Porenbildner enthält, wesentlich dazu beitragen, Beton mit exakten Porengrößen und Porenmengen unabhängig von der Mischart äquifinal herstellen zu können.

Im Einzelnen sind folgende Literaturstellen für das Gebiet der Porenbetone von Interesse:

Die AT-PS 311 863 beschreibt die Verwendung von Polyurethan-Hartschaum als Zusatz zu Beton zur Erhöhung der Frostbeständigkeit. Somit gehört dieses Verfahren zur eingangs genannten Gruppe 3 der möglichen, diesem Zweck dienenden Verfahren. Bei den zugesetzten Hartschäumen handelt es sich um komplett vernetzte, ausgehärtete Produkte, deren Substrat nicht quellen kann und deren Wasseraufnahme allein durch die Saugfähigkeit der Poren bewirkt wird.

Auch gemäß der DE-OS 31 11 536 soll ausdrücklich ein fertig geschäumter offenporiger Kunststoff in Partikelform zu Betonmischungen zugemischt werden.

In gleicher Weise verwendet auch das Verfahren gemäß der DE-OS 24 09 328 Schaumstoffzusätze verschiedenster Art, wobei hier auch, und zwar in erster Linie, anorganische Schaumstoffe, wie Hüttenbims, Blähton und Glasschaum, aber auch offenzelliger Kunststoffschaum genannt wird.

Die DE-OS 30 26 719 sieht ein hydraulisches Bindemittel vor, das Hohlteilchen enthält und dadurch gewährleistet, daß der daraus hergestellte Beton dementsprechend Poren aufweist. Die Hohlteilchen bestehen aus vom Bindemittel unterschiedlichem Material oder aber aus dem Bindemittel selbst, wobei das Verfahren insbesondere darauf ausgerichtet ist, Hohlteilchen mit einer Kruste aus dem Bindemittel zu versehen, damit sich diese Hohlteilchen besser in das Bindemittel einmischen lassen und sich beim Aushärten des Bindemittels gut mit demselben verbinden. Jedenfalls sollen die fertigen Hohlteilchen dem Bindemittel zugesetzt werden, sodaß es eindeutig ist, daß sich bei der Betonherstellung mit diesem Bindemittel die Poren nicht erst während der Härtung des Betons bilden, sondern im Bindemittel vorgegeben sind.

Sofern die Hohlteilchen aus einem vom Bindemittel unterschiedlichen Material bestehen, so sind in diesem Zusammenhang Thermoplast-Teilchen oder Styroporkörner genannt (Seite 14, Zeilen 19-22), die mit einem Bindemittel beschichtet werden und die durch Vergasen oder Verbrennen aus der vom Bindemittel gebildeten porösen Schale zumindest teilweise entfernt (verflüchtigt) werden.

Gemäß einem Beispiel dieser DE-OS können zur Herstellung von Poren auch Naturprodukte, wie Gelatine-Teilchen in die Betonmischung eingebracht werden.

Andere wasserbindende Quellmittel sind in der DE-OS 27 49 637 genannt, wobei es sich um anorganische Substanzen, in erster Linie um Bentonite handelt.

Gemäß der US-PS 3 329 631 werden trockene Pellets aus gehärtetem Kunstharzschaum zu den Betongrundstoffen oder zu Gips zugesetzt, um beim Aushärten der Masse Poren in derselben zu hinterlassen. Das gehärtete Harz ist wasserunlöslich. Das gewonnene Produkt ist ein Leicht- oder Isolierbeton.

Ziel der vorliegenden Erfindung ist die Herstellung eines Normalbetons mit einer durch das Kunststoffgranulat bedingten Mikroporenstruktur, welche die Frostbeständigkeit gewährleistet.

Es soll ein Verfahren geschaffen werden, durch das risikolos konstante Porenmengen und Porengrößen in den Beton eingebracht werden können und außerdem gegebenenfalls ein lagerfähiges hydraulisches Bindemittel, also ein "Sonderzement" erzeugt werden kann, der die vorher beschriebenen Nachteile der bekannten Verfahren ausschließt.

Erfindungsgemäß wird dies dadurch erreicht, daß ein trockenes, zumindest teilweise wasserlösliches und-/oder mit Wasser Gelteilchen bildendes Granulat aus unvollständig gehärtetem Harnstoff-Formaldehyd-Harz zugemischt wird, dem vor der teilweisen Härtung ein übliches Hydrophobierungsmittel zugesetzt wird.

Dieses Granulat aus dem unvollständig gehärteten Harnstoff-Formaldehyd-Harz bildet praktisch feste Partikel. Diese Partikel werden durch Wasserzugabe bei der Bereitung des Gemisches und die Alkalität des Gemisches zumindest teilweise gelöst und/oder bilden mit Wasser Gelteilchen. In diesem Zustand streben die Partikel die geringste Oberfläche und damit eine kugelähnliche Gestalt an. Diese kugelähnlichen Partikel sind hinreichend fest und zäh und überstehen die Beanspruchungen während des Mischens, des Transports od.dgl.

Durch das vor der teilweisen Härtung des Harnstoff-Formaldehyd-Harzes mit Säure zugesetzte Hydrophobierungsmittel wird eine merkliche Verzögerung des Verlaufes des Lösungsvorganges erreicht. Dabei kann zweckmäßigerweise eine zwei- oder mehrmalige Hydrophobierung der Partikel vorgesehen werden.

Wasserunlösliche Harze bleiben im Beton beständig, lösen sich überhaupt nicht auf und hinterlassen daher keine Poren.

Etwa 2 bis 3 Stunden nach der Vermischung mit Wasser und den übrigen Komponenten beginnt der Zement zu erstarren und bildet im Zuge der Erhärtung das Kapillarsystem im Zementstein in sehr rasch steigendem Maße aus. Für diesen Vorgang sind hauptsächlich die kalkhaltigen Klinkerminerale maßgebend. Da alle Portlandzementklinker einen ähnlich hohen Kalkanteil von etwa 60 bis 67 % aufweisen, ist anzunehmen, daß der Lösungsvorgang der Partikel im alkalischen Wasser bei diesen Zementen ähnlich verläuft. Dies wurde durch vergleichende Versuche bestätigt.

Die spezifische Oberfläche des Zementes, vor seiner Reaktion mit Wasser, wird mit etwa 3.000 $cm^2/g$ an-gegeben und steigt während der Erhärtung auf ca. 2,000.000 $cm^2/g$ an. Dabei entstehen bedeutende Oberflächenkräfte und diese verursachen offenbar die Verlagerung der (an-) gelösten Partikel in das Kapillarsystem des Zementsteines.

An den Oberflächen der nunmehr kugelähnlichen Partikel kommt es offenbar zu einer Anreicherung verschiedener Stoffe. Diese Stoffe bilden abschließend dünne Schalen, die den Porenraum begrenzen und nach Aufbrechen der Poren den Eindruck von kugelförmigen Hohlräumen vermitteln.

Bei Versuchen wurde zur Ermittlung des zeitlichen Verlaufes der Porenbildung Kleinprismen mit verschiedener Partikel-Konzentration hergestellt. Die Prüfungen wurden dabei mit solchen Proben im Alter von 1, 2 und 3 Tagen nach deren Herstellung durchgeführt.

Bei diesen Prüfungen konnte festgestellt werden, daß die Bildung der leeren Poren bereits vor dem Ende des ersten Tages nach der Mischung abgeschlossen war.

Bei weiteren Versuchen konnte auch festgestellt werden, daß die Bildung der Poren bei aus einem erfindungsgemäßen Gemisch hergestellten Proben, im wesentlichen zwischen 30min und 24h nach dem Mischen erfolgt ist, in welchem Zeitabschnitt auch der Zement im wesentlichen abbindet, sodaß in dieser Hinsicht ein Zusammenhang bestehen dürfte.

Bei diesen Versuchen konnte festgestellt werden, daß alle Poren leer waren und die Schalen tangential zur kristallinen Porenwand verliefen, wobei häufig ein Abstand ohne durchgehenden Zusammenhang mit der Wand festzustellen war. Die Innenwand der Schalen war oft gesprungen und rissig. Durch diese "indirekte" Struktur ist eine hohe Frost-Tausalz-Beständigkeit gegeben, was sich auch bei entsprechenden Versuchen erwiesen hat.

Bei diesen Versuchen wurde auch festgestellt, daß wesentliche Anteile des Harnstoff-Formaldehyd-Harzes vom Zementstein der Proben aufgenommen wurde.

Besonders günstige Eigenschaften der hergestellten Proben haben sich ergeben, wenn bei der Herstellung des Harnstoff-Formaldehyd-Harzes eine solche Menge an Säure als Härter verwendet wird, daß sich das Harz in einer alkalischen Lösung, z.B. in einer wässrigen n/1 KOH, löst und/oder sich unter Aufnahme von zumindest 10% Wasser in einen gelartigen Körper umwandelt.

Anders ausgedrückt können die Herstellungsbedingungen des Harnstoff-Formaldehyd-Harzes so gewählt werden, daß die Polymerisation hinsichtlich Säuregehalt, Temperatureinwirkung und deren Dauer so gesteuert wird, daß sich das Polymerisat unter den Bedingungen der Hydratation von Zement löst und im entstehenden Zementstein aufgenommen wird.

Günstig ist es, wenn für die Einstellung des Säuregehaltes starke anorganische Säuren wie Salzsäure, Schwefelsäure oder Phosphorsäure oder geeignete wasserlösliche, organische Säuren, wie z.B. Ameisensäure, Maleinsäure oder Oxalsäure, in einer Menge von 1 bis 30 % bezogen auf die Harnstoff-Formaldehyd-Lösung, vorzugsweise 8 bis 10 % 75%ige Phosphorsäure, eingesetzt werden.

Vorteilhafterweise wird die Temperatur für die Polymerisation im Bereich von 50°C bis 99°C, vorzugsweise 85°C bis 95°C, und die Dauer der Temperatureinwirkung 1 bis 24 Stunden, vorzugsweise 8 bis 10 Stunden, gewählt.

Die teilweise Härtung des Harzes kann durch thermische Behandlung erfolgen.

Die Körner eines aus einem solchen Harz hergestellten Granulats bilden mit Wasser formbeständige Hydrogele und lassen sich durch pH-Wert Änderungen und/oder Wasserentzug in Xerogele überführen. Sie werden durch Mischen, notfalls Trocknen, Brechen, Mahlen, Sieben oder Windsichten zu Granulaten oder Körnungen mit den gewünschten Teilchengrößen so aufbereitet, daß der Durchmesser eines einzelnen Kornes oder Partikels zumindest annähernd so groß, insbesondere etwas kleiner ist, wie der Durchmesser einer jeweils gewünschten, anzustrebenden Pore in dem zu erzeugenden Beton. Die Porenanzahl in diesem Beton wird durch die Anzahl der verwendeten Partikel bestimmt.

Werden solche Partikel mit noch nicht erhärtetem Beton, i.a. einem Gemenge von Wasser, Zement und Zuschlagstoffen, vermischt, nehmen diese vorerst Wasser auf und bilden also Gelteilchen mit relativ hohem Wassergehalt bzw. mit einem Wassergehalt, der durch die Zusammensetzung des Partikels gesteuert werden kann. Während des Aushärtens des Betones wird dem Gelteilchen Wasser entzogen, dieses also in ein Xerogel umgewandelt. Die Umwandlung des Hydrogels in ein Xerogel erfolgt im Beton während seiner Aushärtung besonders leicht und günstig, weil die Härtung des Betones durch die sogenannte Hydratisierung, vergleichbar mit der Kristallwasser-Aufnahme von Salzen, eine so hohe Bindungsenergie besitzt, die sicher wesentlich größer ist als die nur mizellare Wasseranlagerung bei Gelen.

Es ist bekannt, daß - wenn einem Gel Flüssigkeit und allenfalls darin gelöste Stoffe entzogen werden - die Menge und räumliche Anordnung der verbleibenden Feststoffe meist netzartig ist und auf jeden Fall als Xerogel ein kleineres Volumen besitzt. Zwangsläufig hinterläßt das in das Xerogel umgewandelte Hydrogel-Partikel einen Hohlraum, also eine Pore. Das Volumen der Pore entspricht etwa dem Volumen des Hydrogel-Partikels, die Porenanzahl entspricht der eingesetzten Partikel-Menge.

Nach einem weiteren Merkmal der Erfindung kann vorgesehen sein, daß ein Harnstoff-Formaldehyd-Harz-Granulat eingesetzt wird, dessen Korngröße bis 0,25mm, vorzugsweise bis 0,09mm, am besten bis 0,032mm beträgt.

Bei Versuchen wurden Partikel in verschiedene Kornklassen getrennt verwendet und die in den Proben gegebenen Porendurchmesser ermittelt. Dabei konnte folgender Zusammenhang festgestellt werden.

| Partikel-Kornklasse | | mittlerer wahrer |
|---|---|---|
| von mm | bis mm | Porendurchmesser mm |
| | 0,032 | 0,04 |
| 0,032 | 0,063 | 0,08 |
| 0,063 | 0,090 | 0,08 |
| 0,090 | 0,250 | 0,10 |

Daraus ergibt sich, daß bei den Granulaten mit kleineren Korngrößen der Unterschied zwischen der Korngröße und den gebildeten Poren größer ist und damit auch eine höhere Ergiebigkeit des eingesetzten Harzes festzustellen ist. Außerdem haben sich Porendurchmesser im Bereich von 0,04mm bei Tests im Hinblick auf die Frost-Tausalz-Beständigkeit als besonders günstig erwiesen.

Weiters wurde bei den Versuchen auch der Abstandsfaktor der Poren ermittelt. Dabei ergaben sich die folgenden Werte:

| Partikel-Kornklasse | | Abstandfaktor |
|---|---|---|
| von mm | bis mm | errechnet aus Kugelporen in mm |
| 0 | 0,032 | 0,06 |
| 0,032 | 0,063 | 0,11 |
| 0,063 | 0,090 | 0,12 |
| 0,090 | 0,25 | 0,16 |

Im Hinblick auf die in verschiedenen Richtlinien enthaltenen Begrenzungen für den Abstandsfaktor, die für viele Anwendungen im Bereich von max. 0,15 bis max. 0,18 mm liegen, ergibt sich, daß bei einem kleineren Abstandsfaktor die Korngröße der Partikel unter 0,09mm gehalten werden soll. Je nach dem, ob für den vorgesehenen Einsatzzweck und den entsprechenden Anforderungen allein ein möglichst kleiner Abstandsfaktor maßgeblich ist, ist daher der Einsatz eines Granulates mit einer Korngröße von bis zu 0,032 oder bis zu 0,09mm vorteilhaft.

Nach einem weiteren Merkmal der Erfindung kann vorgesehen sein, daß das Harnstoff-Formaldehyd-Harz-Granulat in einer Menge von 0,1 bis 6 Gew.%, vorzugsweise von 2 bis 4 Gew.% bezogen auf die Bindemittelmenge eingesetzt wird.

Bei Versuchen zur Ermittlung eines Zusammenhanges zwischen dem Anteil der Partikel und den in den entsprechenden Proben feststellbaren Poren konnten folgende Werte ermittelt werden.

| Versuch-Nr. | 99/86 | 87/86 | 83/86 | 88/86 |
|---|---|---|---|---|
| Partikel (%v.ZG) | 0 | 2 | 4 | 6 |
| Konsistenz | K3 | K3 | K3 | K3 |
| Ausbreitmaß (cm) | 49,0 | 40,0 | 39,5 | 39,0 |
| Sieblinie | 2a | 2a | 2a | 2a |
| Mischdauer (min) | 2 | 2 | 2 | 2 |
| Zementgehalt (kg/ $m^3$) | 477 | 462 | 460 | 452 |
| W/Z-Wert | 0,45 | 0,45 | 0,45 | 0,45 |
| Frischbetonrohdichte (kg/ $m^3$) | 2390 | 2320 | 2320 | 2290 |
| RG nach Entf. kg/m$^3$ | 2435 | 2405 | 2395 | 2355 |
| Würfeldruckfestigkeit nach 28 Tagen (N/mm$^2$) | 44,0 | 45,0 | 42,6 | 35,0 |
| Schätzung der Poren mit Taschenmikroskop(Vol.%) | | | | |
| von | 4,0 | 4,0 | 5,5 | 5,5 |
| bis | 4,5 | 4,5 | 6,0 | 6,0 |
| x.) | | | | |
| Porenzahl | 0,5 | 5 | 5 | 2 |
| Porengröße | 4 | 5 | 4 | 4 |
| Produkt | 2 | 25 | 20 | 8 |

2a = Sandarm

RG nach Entf. = Raumgewicht nach dem Entformen

x.) Schätzung der Frost-Tausalzbeständigkeit gemäß nachstehendem Kurzverfahren

Den bei der Porenzahl und der Porengröße angegebenen Kenngrößen kommt die folgende Bedeutung zu:

6

## Kenngrößen

| Porenanzahl: | keine | 0 | |
| | sehr wenig | 1 | |
| | wenig | 2 | |
| | mittel-viel | 3 | |
| | viel | 4 | |
| | sehr viel | 5 | |
| Porengröße: | sehr klein | 1 | (kleiner 0,02 mm) |
| | klein | 3 | (0,02 - 0,03 mm) |
| | mittelgroß | 5 | (0,03 - 0,06 mm) |
| | groß | 1 | (0,06 - 0,12 mm) |
| | sehr groß | 0 | (größer als 0,12 mm) |

Dabei stellen die ermittelten Produkte ein Maß für die Frost-Tausalz-Beständigkeit dar, wobei bei einer Summe der Produkte unter 15 diese Beständigkeit nicht, bei einer Summe um 15 bedingt und bei einer Summe größer als 20 sicher gegeben ist, wie durch entsprechende Versuche festgestellt wurde.

Aus der obenstehenden, den Zusammenhang der Porigkeit der Proben mit deren Gehalt an Harzpartikeln darstellenden Tabelle ergibt sich die beste Frost-Tausalz-Beständigkeit bei einem Harzzusatz von 2 bis 4% zu der Mischung.

Nach einem weiteren Merkmal der Erfindung kann vorgesehen sein, daß das Harnstoff-Formaldehyd-Harz-Granulat dem trockenen Bindemittel zugemischt wird. Dies erleichtert die Anwendung an der Baustelle wesentlich, da es durch die Vormischung zu einem Umhüllen der Harzpartikel mit Zement kommt. Vorteilhaft ist die Mischung aus 50 Gew.% Harz und 50 Gew.% Bindemittel.

Die Herstellung der Harzpartikel kann zweckmäßigerweise derart erfolgen, daß das ungehärtete Harnstoff-Formaldehyd-Harz laufend mit einer als Härter wirkenden Säure, z.B. Phosphorsäure, dosiert vermengt und versprüht wird, wonach den entstandenen Teilchen Zement als Mahlhilfe zugesetzt und diese Mischung anschließend zerkleinert wird. Das so erhaltene Pulver läßt sich an der Baustelle praktisch wie Zement verarbeiten.

Die folgenden Beispiel dienen zur Erläuterung der Erfindung:

Beispiel 1

Rezept einer Frost-Tausalz-beständigen Betonmischung
Zusammensetzung für 1 m³ Frischbeton:

| Zementgehalt | 332 kg |
| Harzpartikel | 13 kg |
| Wasser | 159 lt |
| Zuschlagstoffe | 1909 kg |

Dieser Beton hatte folgende Betonkennwerte

| Frischbetondichte | 2413 kg |
| Konsistenz | K 3 |
| Wasser/Zementwert | 0,45 |

Beispiel 2

Verschieden große Partikel aus verschieden löslichem Harnstoff-Formaldehyd-Harz wurden einer Betonmischung zugesetzt. Nach Erhärtung des Betones wurde die Porenzahl und die Porengröße mikroskopisch gezählt und gemessen.

| Probe Nr. | Harzpartikel- größe im Mittel: | Löslichkeit des Harzes: | Porenanzahl pro Zählfeld: | Porengröße im Mittel: |
|---|---|---|---|---|
| 101 | 40 µm | schlecht | 10 | 150 µm |
| 102 | 40 µm | gut | 162 | 40 µm |
| 103 | 120 µm | gut | 120 | 120 µm |
| 104 | 40 µm | sehr gut | 179 | 40 µm |
| 105 | 120 µm | schlecht | 23 | 150 µm |
| 106 | 120 µm | gut | 19 | 170 µm |

Bei Prüfung der Frost-Tausalz-Beständigkeit nach ÖNORM haben sich die Proben Nr. 102 und 104 als guter, brauchbarer und Frost-Tausalzbeständiger Beton erwiesen.

**Patentansprüche**

1. Verfahren zur Herstellung von Poren enthaltenden Festkörpern aus einem Gemisch von Bindemitteln, vorzugsweise Zement, Zuschlagstoffen sowie gegebenenfalls an sich bekannten Hilfs- und Zusatzstoffen durch Zugabe von Wasser, Verformung und gegebenenfalls Verdichtung der entstehenden Masse und Aushärtung derselben,
**dadurch gekennzeichnet,**
daß ein trockenes, zumindest teilweise wasserlösliches und/oder mit Wasser Gelteilchen bildendes Granulat aus unvollständig gehärtetem Harnstoff-Formaldehyd-Harz zugemischt wird, dem vor der teilweisen Härtung ein übliches Hydrophobierungsmittel zugesetzt wird.

2. Verfahren nach Anspruch 1,
**dadurch gekennzeichnet,**
daß bei der Herstellung des Harzes aus dem Harnstoff-Formaldehyd-Polymerisat eine solche Menge an Säure verwendet wird, daß sich das Harz in einer alkalischen Lösung, z.B. in einer wässrigen n/1 KOH, löst und/oder sich unter Aufnahme von zumindest 10% Wasser in einen gelartigen Körper umwandelt.

3. Verfahren nach Anspruch 1,
**dadurch gekennzeichnet,**
daß die Herstellungsbedingungen des Harnstoff-Formaldehyd-Harzes so gewählt werden, daß die Polymerisation hinsichtlich Säuregehalt, Temperatureinwirkung und deren Dauer so gesteuert wird, daß sich das Polymerisat unter den Bedingungen der Hydratation von Zement löst und im entstehenden Zementstein aufgenommen wird.

4. Verfahren nach einem der Ansprüche 1 bis 3,
**dadurch gekennzeichnet,**
daß für die Einstellung des Säuregehaltes starke anorganische Säuren wie Salzsäure, Schwefelsäure oder Phosphorsäure oder geeignete wasserlösliche, organische Säuren, wie z.B. Ameisensäure, Maleinsäure oder Oxalsäure, in einer Menge von 1 bis 30 %, bezogen auf die Harnstoff-Formaldehyd-Lösung, vorzugsweise 8 bis 10 % 75%ige Phosphorsäure, eingesetzt werden.

5. Verfahren nach einem der Ansprüche 1 bis 4,
**dadurch gekennzeichnet,**
daß die Temperatur für die Polymerisation im Bereich von 50°C bis 99°C, vorzugsweise 85°C bis 95°C, und die Dauer der Temperatureinwirkung 1 bis 24 Stunden, vorzugsweise 8 bis 10 Stunden, gewählt wird.

6. Verfahren nach einem der Ansprüche 1 bis 5,
**dadurch gekennzeichnet,**
daß ein Harnstoff-Formaldehyd-Harz-Granulat eingesetzt wird, bei welchem der überwiegende Teil der Granulatkörner eine Korngröße bis 0,25mm, vorzugsweise bis 0,09mm, am besten bis 0,032mm beträgt.

8

**7.** Verfahren nach einem der Ansprüche 1 bis 6,
**dadurch gekennzeichnet,**
daß das Harnstoff-Formaldehyd-Harz-Granulat in einer Menge von 0,1 bis 6 Gew.%, vorzugsweise von 2 bis 4 Gew.% bezogen auf die Bindemittelmenge eingesetzt wird.

**8.** Verfahren nach einem der Ansprüche 1 bis 7,
**dadurch gekennzeichnet,**
daß das Harnstoff-Formaldehyd-Harz-Granulat dem trockenen Bindemittel zugemischt wird.

## Claims

**1.** Process for producing solid bodies containing pores from a mixture of binders, preferably cement, aggregates and, if appropriate, auxiliaries and additives known per se by addition of water, deformation and, if appropriate, compaction of the resulting mass and hardening thereof, characterised in that a dry granulated product, which is at least partially water-soluble and/or forms gel particles with water, of incompletely cured urea/formaldehyde resin is admixed, to which a conventional waterproofing agent is added before the partial curing.

**2.** Process according to Claim 1, characterised in that, in the preparation of the resin from the urea/formaldehyde polymer, such a quantity of acid is used that the resin dissolves in an alkaline solution, for example in aqueous N/1 KOH, and/or is converted with absorption of at least 10% of water into a gel-like body.

**3.** Process according to Claim 1, characterised in that the preparation conditions of the urea/formaldehyde resin are selected such that the polymerisation is controlled with respect to acid content, temperature action and duration thereof in such a way that the polymer dissolves under the conditions of the hydration of cement and is absorbed in the hardened cement paste being formed.

**4.** Process according to one of Claims 1 to 3, characterised in that, for adjusting the acid content, strong inorganic acids such as hydrochloric acid, sulphuric acid or phosphoric acid, or suitable water-soluble organic acids such as, for example, formic acid, maleic acid or oxalic acid, are used in a quantity of 1 to 30%, relative to the urea/formaldehyde solution, preferably 8 to 10% of 75% strength phosphoric acid.

**5.** Process according to one of Claims 1 to 4, characterised in that the temperature for the polymerisation is selected to be in the range from 50°C to 99°C, preferably 85°C to 95°C, and the duration of the temperature action is selected to be 1 to 24 hours, preferably 8 to 10 hours.

**6.** Process according to one of Claims 1 to 5, characterised in that a granulated urea/formaldehyde resin is used, in which the predominant part of the granulated grains has a grain size of up to 0.25 mm, preferably up to 0.09 mm, at best up to 0.032 mm.

**7.** Process according to one of Claims 1 to 6, characterised in that the granulated urea/ formaldehyde resin is used in a quantity of 0.1 to 6% by weight, preferably from 2 to 4% by weight, relative to the quantity of binder.

**8.** Process according to one of Claims 1 to 7, characterised in that the granulated urea/formaldehyde resin is admixed to the dry binder.

## Revendications

**1.** Procédé pour la fabrication de corps solides, contenant des pores, à partir d'un mélange de liants, de préférence de ciment, d'agrégats, ainsi qu'éventuellement d'auxiliaires et d'additifs connus en soi, par addition d'eau, formage et éventuellement compactage de la masse formée et durcissement de cette dernière, caractérisé en ce qu'on introduit dans le mélange un granulat sec, soluble au moins partiellement dans l'eau et/ou formant des particules de gel avec l'eau, ce granulat étant en une résine urée-formaldéhyde incomplètement durcie à laquelle on ajoute, avant le durcissement partiel, un agent courant rendant hydrophobe.

9

**2.** Procédé suivant la revendication 1, caractérisé en ce que, lors de la préparation de la résine à partir du produit de polymérisation urée-formaldéhyde, on utilise une quantité d'acide telle que la résine se dissolve dans une solution alcaline, par exemple dans une solution aqueuse de KOH n/l, et/ou se transforme en un corps du type gel en absorbant au moins 10 % d'eau.

**3.** Procédé suivant la revendication 1, caractérisé en ce que les conditions de préparation de la résine urée-formaldéhyde sont choisies de façon telle que la polymérisation soit commandée, en ce qui concerne la teneur en acide, l'action de la température et sa durée, de manière que le produit de polymérisation se dissolve dans les conditions de l'hydratation du ciment et soit absorbé dans la pâte de ciment obtenue après la prise formée.

**4.** Procédé suivant l'une des revendications 1 à 3, caractérisé en ce que, pour le réglage de la teneur en acide, on utilise des acides non organiques forts, tels que l'acide chlorhydrique, l'acide sulfurique ou l'acide phosphorique, ou des acides organiques solubles dans l'eau appropriés, tels que par exemple l'acide formique, l'acide maléïque ou l'acide oxalique, en une proportion de 1 à 30 %, de préférence de 8 à 10 % d'acide phosphorique à 75 %, cette proportion étant rapportée à la solution d'urée-formaldéhyde.

**5.** Procédé suivant l'une des revendications 1 à 4, caractérisé en ce que la température de la polymérisation est choisie dans l'intervalle de 50 °C à 99 °C, de préférence de 85 °C à 95 °C, et la durée de l'action de la température est choisie de 1 à 24 heures, de préférence de 8 à 10 heures.

**6.** Procédé suivant l'une des revendications 1 à 5, caractérisé en ce qu'on utilise un granulat de résine urée-formaldéhyde dans lequel la majeure partie des grains du granulat ont une granulométrie allant jusqu'à 0,25 mm, de préférence jusqu'à 0,09 mm et, mieux, jusqu'à 0,032 mm.

**7.** Procédé suivant l'une des revendications 1 à 6, caractérisé en ce qu'on utilise le granulat de résine urée-formaldéhyde dans une proportion de 0,1 à 6 % en poids, de préférence de 2 à 4 % en poids, rapportée à la quantité de liant.

**8.** Procédé suivant l'une des revendications 1 à 7, caractérisé en ce qu'on mélange le granulat de résine urée-formaldéhyde au liant sec.